# EUROPÄISCHE PATENTSCHRIFT

(11) **EP 0 526 802 B1**
(45) Veröffentlichungstag und Bekanntmachung des Hinweises auf die Patenterteilung: **28.02.2001**
(21) Anmeldenummer: 92112526.6
(22) Anmeldetag: 22.07.1992
(51) Int. Cl.: H04M 1/72, H04N 7/14

(54) **Funktelefon**
Radiotelephone
Radiotéléphone

(30) Priorität: 07.08.1991 DE 4126105
(43) Veröffentlichungstag der Anmeldung: 10.02.1993
(60) Teilanmeldung: 00107819.5
(73) Patentinhaber: ALCATEL, 75008 Paris (FR)
(72) Erfinder: Ohnsorge, Horst, Dr., W-7141 Freiberg (DE)
(74) Vertreter: Knecht, Ulrich Karl, Dipl.-Ing.

(56) Entgegenhaltungen:
- EP-A- 0 172 473
- DE-A- 3 828 485
- PATENT ABSTRACTS OF JAPAN vol. 12, no. 414 (E-677)2. November 1988
- PATENT ABSTRACTS OF JAPAN vol. 11, no. 292 (E-543)19. September 1987
- PATENT ABSTRACTS OF JAPAN vol. 13, no. 433 (E-824)27. September 1989
- PATENT ABSTRACTS OF JAPAN vol. 15, no. 200 (E-1070)22. Mai 1991
- TELENORMA NACHRICHTEN Nr. 93, 1989, FRANKFURT, DE Seiten 52 - 53 , XP74929 KUMMEROW, MEURER 'Bildtelefon- ein Kommunikationsdienst im ISDN ab1991'

## Beschreibung

Die Erfindung betrifft ein Funktelefon.

Ein derartiges Funktelefon ist z.B. in der Zeitschrift "Mobilfunk" 1 (1988), Heft 1, Seite 14 beschrieben. Das Gerät hat ein quaderförmiges Gehäuse von Handapparatgröße, in dem eine Sende- und Empfangseinrichtung, Wähl- und Funktionstasten, ein Anzeigenfeld, elektroakustische Wandler, eine Stromversorgung in Form von aufladbaren Akkumulatoren sowie eine hochintegrierte, elektronische Schaltung untergebracht sind. An der Oberseite des Gehäuses ist eine Antenne anschraubbar, außerdem ist dort ein Schlitz zum Einführen einer Berechtigungskarte in einen eingebauten Kartenleser vorhanden. Die Wähltasten bilden eine vollalphanumerische Tastatur, die Elektronik enthält zahlreiche Speicherplätze für Rufnummern und -namen. Für Gebührenanzeige und verschiedene andere Leistungsmerkmale bietet das Gerät Menü-Funktionen. Zubehör für tragbaren als auch fahrbaren Einsatz im Kraftfahrzeug, wie z.B. Fahrzeughalterung, Tragetasche, Tischladegerät, Freisprecheinrichtung, ermöglicht die Nutzung aller Vorteile eines Mobilfunknetzes.

Ferner sind Funktelefone für geringe Reichweite bekannt, sogenannte schnurlose Telefone, die eine an das Fernmeldenetz angeschlossene Feststation und ein schnurloses Handgerät haben, wobei letzteres alle Bedienungstasten und einen Akkumulator enthält, z.B. "sinus 1" oder "sinus 2" der Deutschen Bundespost (Prospekte FTZ L 16-4, Best. Nr. 210A bzw. 210B). Die Feststation ist mit einer Ladevorrichtung ausgerüstet, die bei aufgelegtem Handgerät den Akkumulator auflädt, der voll aufgeladen eine mehrstündige Unabhängigkeit von der Feststation ermöglicht. Der Funkkontakt zwischen Feststation und Handgerät erfolgt über zahlreiche Kanäle im 900-MHz-Bereich.

Der Erfindung liegt die Aufgabe zugrunde, den Anwendungsbereich und Komfort eines Funktelefones weiter zu verbessern. Gelöst wird diese Aufgabe durch die im Anspruch 1 angegebenen Merkmale, Weiterbildungen sind den Unteransprüchen zu entnehmen. Durch die Erweiterung des Funktelefones auf den Videobereich kann bei Bedarf der mündlichen Kommunikation die bildliche hinzugefügt werden, wodurch die Informationsübermittlung wesentlich verbessert und erleichtert werden kann.

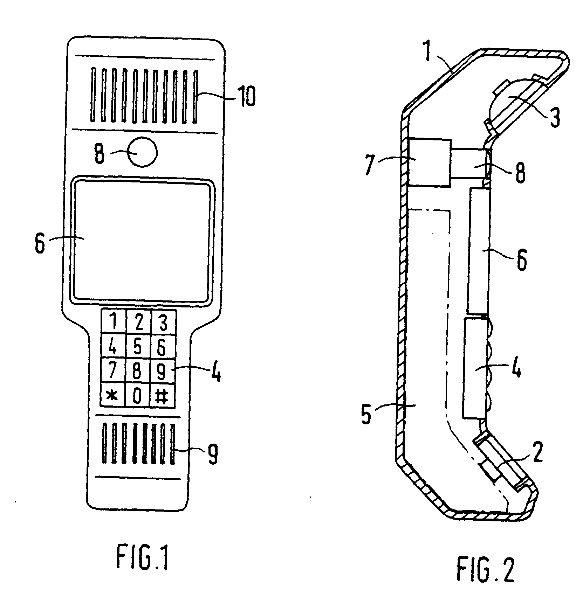

Die Erfindung wird anhand eines Ausführungsbeispieles beschrieben, das in der zugehörigen Zeichnung dargestellt ist. Deren Figuren 1 und 2 zeigen ein mobiles Funktelefon mit Videoeinrichtung in Form eines Handgerätes in Vorderansicht und in einem schematisierten Längsschnitt.

Das mobile Funkvideofon ist, wie bei Funktelefonen üblich, als Handgerät ausgebildet. Sein Gehäuse 1 hat deshalb eine gut zu handhabende Form, die der eines Telefon-Handapparates ähnlich ist. Wie aus Fig. 2 ersichtlich ist, können die beiden Enden des Gehäuses, in denen hinter entsprechenden Schalldurchlässen 9 und 10 die akustischen Wandler 2 und 3 untergebracht sind, nach innen geneigt sein, um eine gute Verständigung beim unmittelbaren Sprechen zu gewährleisten. Das Gehäuse kann jedoch auch gestreckte Form haben. Das Gerät ist mit einer Freisprecheinrichtung ausgerüstet. Wie üblich sind folgende Teile in dem Gehäuse 1 angeordnet: Mikrofon 2, Lautsprecher 3, dazwischen, oberhalb des Mikrofons 2, eine Wähltastatur 4 und, nach Bedarf, weitere Funktionstasten (nicht dargestellt), sowie die elektronische Schaltung 5 des Gerätes, die durch strichpunktierte Linien angedeutet ist. Die Tasten können auch auf der anderen, den Schalldurchlässen 9 und 10 abgewandten Seite (Außenseite) des Gehäuses 1 angeordnet sein.

Außerdem ist über der Wähltastatur 4 ein flaches LC-Display als Videowiedergabeeinrichtung 6, angebracht, das zumindest in diesem Teil die Breite des Gehäuses 1 bestimmt. Wiederum darüber ist eine kleine Kamera 7 mit Weitwinkelobjektiv 8 als Videoaufnahmeeinrichtung eingebaut. Damit steht ein Funkvideofon für Bild- und Tonkommunikation zur Verfügung, mit dem, wie mit den mobilen Telefonen, größtmögliche Unabhängigkeit und Beweglichkeit gegeben ist, gepaart nun auch mit visuellem Komfort.

Für die Kommunikation wird im ISDN je ein B-Kanal für die Audio- und für die Video-Übertragung benutzt. Im Mobilfunknetz C geschieht die Übertragung über zwei Kanäle mit einer Übertragungsrate von jeweils 32 Kbit/s. Alternativ kann für den Einsatz im Mobilfunknetz Audio mit 8 Kbit/s und Video mit 24 Kbit/s übertragen werden, bis höhere Bitraten zur Verfügung stehen.

## Patentansprüche

1. Als Handgerät ausgebildetes Funktelefon mit einem Handapparat-Gehäuse (1), das mit einer Wähltastatur (4) und hinter Schalldurchlässen (9, 10) eingesetzten elektroakustischen Wandlern (2, 3) ausgerüstet ist,
**dadurch gekennzeichnet**, daß eine Videoaufnahmeeinrichtung (7) und eine Videowiedergabeeinrichtung (6) innerhalb des Handapparat-Gehäuses (1) angeordnet sind, und daß die Videoaufnahmeeinrichtung (7), die Videowiedergabeeinrichtung (6) und die Schalldurchlässe (9, 10) in der Vorderseite des Handapparat-Gehäuses angeordnet sind.

2. Funktelefon nach Anspruch 1, dadurch gekennzeichnet, daß die Videoaufnahmeeinrichtung (7) eine Videokamera und die Videowiedergabeeinrichtung (6) ein LC-Display ist.

3. Funktelefon nach Anspruch 1, dadurch gekennzeichnet, daß eine Audio-Übertragung mit 8 Kbit/s und eine Video-Übertragung mit 24 Kbit/s im mobilen Funktelefonnetz erfolgt.

4. Funktelefon nach Anspruch 1, dadurch gekennzeichnet, daß das Funktelefon mit Mitteln zur Audio- und Videoübertragung über zwei Funkkanäle mit je einer Übertragungsrate von 32 Kbit/s versehen ist.

5. Funktelefon nach Anspruch 1, dadurch gekennzeichnet, daß das Funktelefon mit Mitteln zur Audio- und Videoübertragung über zwei B-Kanäle des ISDN, je einer für die Audio- und einer für die Video-Übertragung, versehen ist.

## Claims

1. A radiotelephone designed as a hand-held unit and comprising a handset housing (1) which is equipped with a keypad (4) and with electroacoustic transducers (2, 3) mounted behind sound apertures (9, 10),
**characterized in** that a video pickup device (7) and a video display device (6) are mounted in the handset housing, and that the video pickup device (7), the video display device (6), and the sound apertures (9, 10) are disposed at the front side of the handset housing.

2. A radiotelephone as claimed in claim 1, characterized in that the video pickup device (7) is a video camera, and that the video display device (6) is an LC display.

3. A radiotelephone as claimed in claim 1, characterized in that audio transmission and video transmission take place in a mobile radiotelephone network at 8 kb/s and 24 kb/s, respectively.

4. A radiotelephone as claimed in claim 1, characterized in that the radiotelephone comprises means for audio and video transmission over two 32-kb/s radio channels.

5. A radiotelephone as claimed in claim 1, characterized in that the radiotelephone comprises means for audio and video transmission over two ISDN B channels, with one channel used for audio transmission and the other channel used for video transmission.

## Revendications

1. Radiotéléphone réalisé en tant que combiné, avec un boîtier de combiné (1), qui est équipé d'un clavier de numérotation (4) et de traducteurs électroacoustiques (2, 3) derrière des passages acoustiques (9, 10), caractérisé en ce qu'un dispositif d'enregistrement vidéo (7) et un dispositif de reproduction vidéo (6) sont disposés à l'intérieur du boîtier de combiné (1), et en ce que le dispositif d'enregistrement vidéo (7), le dispositif de reproduction vidéo (6) et les passages acoustiques (9, 10) sont disposés dans la face avant du boîtier de combiné.

2. Radiotéléphone selon la revendication 1, caractérisé en ce que le dispositif d'enregistrement vidéo (7) est une caméra vidéo et le dispositif de reproduction vidéo (6) est un affichage à cristaux liquides.

3. Radiotéléphone selon la revendication 1, caractérisé en ce qu'une transmission audio à 8 Kbit/s et une transmission vidéo à 24 Kbit/s est effectuée dans le réseau radiotéléphonique mobile.

4. Radiotéléphone selon la revendication 1, caractérisé en ce que le radiotéléphone est équipé de moyens de transmission audio et vidéo à travers deux canaux radio à une vitesse de transmission respective de 32 Kbit/s.

5. Radiotéléphone selon la revendication 1, caractérisé en ce que le radiotéléphone est équipé de moyens de transmission audio et vidéo à travers deux canaux B du RNIS, respectivement un pour la transmission audio et un pour la transmission vidéo.
